# EUROPEAN PATENT SPECIFICATION

(11) **EP 3 896 392 B1**
(45) Date of publication and mention of the grant of the patent: **02.04.2025**
(21) Application number: 20169779.4
(22) Date of filing: 16.04.2020
(51) Int. Cl.: G01C 21/00

(54) **PROCESSING NOISE DATA FOR VERIFYING OR UPDATING A MAP OF A SITE**
VERARBEITUNG VON RAUSCHDATEN ZUR VERIFIZIERUNG ODER AKTUALISIERUNG DER KARTE EINES STANDORTS
TRAITEMENT DE DONNÉES RELATIVES AU BRUIT POUR VÉRIFIER OU METTRE À JOUR UNE CARTE D'UN SITE

(43) Date of publication of application: 20.10.2021
(73) Proprietor: HERE Global B.V., 5611 ZT Eindhoven (NL)
(72) Inventor: Khan, Muhammad Irshan, 33720 Tampere (FI); Wirola, Lauri Aarne Johannes, 33100 Tampere (FI)
(74) Representative: Sariot, Eray

(56) References cited:
- US-B1- 10 488 860

## Description

### FIELD OF THE DISCLOSURE

The invention relates to the field of verifying or updating a map of a site, in particular to the field of processing noise data for verifying or updating a map of a site.

### BACKGROUND

Maps for sites inside a building or a complex of buildings represent a model of the site like a floor map. Such maps often fail to indicate the current use of areas or locations on the site, for example because the use of the area or location has been changed or is not indicated by the map. To keep such maps up-to-date, the site could be manually surveyed on a regular basis which is however cumbersome and inefficient.

In the related art, US10488860B1 discloses systems and methods for collecting and geocoding object data, wherein the object data comprises content that may be associated with a location. In some embodiments, the object data is audio data collected and associated with an object.

### SUMMARY OF THE INVENTION

In this section, exemplary aspects of the invention are disclosed.

According to an exemplary aspect, a computer-implemented method is disclosed. The method is defined in claim 1.

The disclosed method may be performed by an apparatus (e.g. an apparatus of the apparatuses disclosed below).

The site is at least partially inside a building or a complex of buildings. The building or the complex of buildings may be a shopping center, a parking garage, a train station, a bus station, an airport, a company site etc.

Obtaining data (e.g. noise capture reports) may be understood to mean receiving (e.g. by means of a communication interface) or capturing (e.g. by means of a sensor like a noise sensor and/or a positioning sensor and/or a clock) or determining (e.g. by means of a processor) the data. Holding available data (e.g. noise capture reports) may be understood to mean storing the data (e.g. in storing means like a memory).

Position data may be understood to represent a position or an estimate of a position (e.g. a capture position) captured by a positioning sensor (e.g. a GNSS (Global Navigation Satellite System) sensor). Alternatively or additionally the position data representing a position or an estimate of a position may be determined by using signals of opportunity available in the environment and captured by a sensor, for example (1) by using a radio positioning method like radio fingerprints and/or triangulation and/or trilateration based on available radio signals (e.g. WLAN radio signals) captured by a radio interface or (2) by using image signals (e.g. representing a visual scene containing one or more characteristic landmarks) captured by an image sensor (e.g. a camera) or (3) dead reckoning with inertial sensor data captured by one or more inertial sensors (e.g. gyroscope, accelerometer , magnetometer etc.). For example, position data may represent such a position or such an estimate of a position in the form of geographic coordinates (e.g. longitude and latitude and, optionally, altitude or floor level).

Noise is understood to be ambient noise or sound. Noise data are understood to represent one or more noise characteristics (e.g. sound characteristics) captured by a noise sensor (e.g. a sound sensor like a microphone). Non limiting examples for such a noise characteristic are a noise level (e.g.an average or maximum sound level) or a noise spectrum. For example, the one or more noise characteristics may be represented as noise record captured by a microphone in encoded form, for example according to an audio encoding algorithm like MPEG-1 Audio Layer III or MPEG-2 Audio Layer III as specified by the Moving Picture Experts Group (MPEG). Such a noise record may for example enable determining at least one of (1) a noise level and (2) a noise spectrum. A noise level may be understood to be a noise power level (e.g. in W or dB), for example representing the maximum noise power or average noise power of noise represented by such a noise record. A noise spectrum may be understood to be a noise power spectrum, for example describing noise power distributed over frequency (e.g. over discrete frequencies or continuous range of frequencies in a predetermined frequency interval) of noise represented by such a noise record. Alternatively or additionally, the noise data may represent at least one of (1) a noise level) or (2) a noise spectrum captured by a noise sensor.

Time stamp data are understood to represent a date and a time of day captured by a clock, for example in UNIX time format.

The respective noise data of each noise capture report of the plurality of noise capture reports represent one or more respective noise characteristics, wherein the one or more respective noise characteristics are/were captured both (1) at the respective capture position an estimate of which is represented by the respective position data of the respective noise capture report and (2) at the respective capture time which is represented by the respective time stamp data of the respective noise capture report. It is to be understood that, for example due to measurement errors or inaccuracies, (1) the respective estimate of the respective capture position of the respective position data may deviate from the exact position where the one or more respective noise characteristics are/were captured and/or (2) the respective capture time of the respective time stamp data may deviate from the exact time when the one or more respective noise characteristics are/were captured. For example, each noise capture report of the plurality of noise capture reports may be captured by a respective noise capture report collection device (e.g. a respective noise capture report collection device of a plurality of noise capture report collection devices) and includes (1) respective position data and (2) respective noise data and (3) respective time stamp data captured by the respective noise capture report collection device (e.g. by a respective sensor of the respective noise capture report collection device). For example, the respective estimate of the respective capture position represented by the respective position data may be captured by a positioning sensor (e.g. a GNSS sensor) of the respective noise capture report collection device; and the one or more respective noise characteristics represented by the noise data may be captured by a noise sensor (e.g. a microphone) of the respective noise capture report collection device; and the respective capture time represented by the time stamp data may be captured by a clock of the respective noise capture report collection device. In particular, the one or more respective noise characteristics represented by the noise data may be understood to be captured by a noise sensor (e.g. a microphone) of the respective noise capture report collection device at the respective capture position and at the respective capture time (i.e. when the respective noise capture report collection device was at the respective capture position).

For example, the respective observation report collection device may be one of (1) a mobile device which is moving on the site and (2) a fixed device which is installed at a fixed location on the site. An example of such a mobile device is a smartphone, a tablet computer, a notebook computer, a smart watch or a smart band. An example of such a fixed device is an Internet-of-Thing (IoT) device Processing noise data represented by one or more noise capture reports of the plurality of noise capture reports to determine a respective noise context is understood to mean that the noise context is determined by processing the noise data. Thereby, the noise data may be processed according to a predetermined algorithm. As a result of the processing, the noise context is obtained.

It is to be understood that, in addition to the noise data, further data (e.g. position data and/or time stamp data and/or sensor data) represented by the one or more noise capture reports of the plurality of noise capture reports may be processed to determine a respective noise context. For example, the position data and/or the time stamp data represented by the one or more noise capture reports of the plurality of noise capture reports may be processed together with the noise data to determine a respective noise context.

That the respective noise context is associated with the respective area or location on the site is understood to mean that only noise data captured in or within a predetermined threshold distance from the respective area or location is processed to determine the respective noise context. Each of the one or more noise capture reports of the plurality of noise capture reports (i.e. which represent the noise data processed to determine the respective noise context) includes respective position data representing a respective estimate of a respective capture position which is in or within a predetermined threshold distance from the respective area or location.

The respective noise context represents one or more noise characteristics for the respective area or location which are expected to be typical for the respective area or location based on the noise data represented by the one or more noise capture reports of the plurality of noise capture reports. To this end, the respective noise context may for example represent at least one of (1) one or more average noise characteristics of the one or more respective noise characteristics represented by the noise data (i.e. the noise data represented by the one or more noise capture reports of the plurality of noise capture reports) or (2) one or more developments over time of the one or more noise characteristics represented by the noise (i.e. the noise data represented by the one or more noise capture reports of the plurality of noise capture reports).

Such a noise context enables determining an intended use and/or a frequency of use of the respective area or location. For example, if the respective noise context represents an average noise level over time of the respective area or location which indicates an increased noise level at certain times of a day, the noise context may be considered to indicate that respective area or location is more frequently used at these times of the day than in the remaining times of the day. Moreover, if these times of the day are for example around breakfast time, lunch time and dinner time, the noise context may be considered to indicate that respective area or location may be an eating area or location like a kitchen. This information could for example be used to update or verify a map of the site, in particular to update or verify an intended use or frequency of use of the respective area or location indicated by the map of the site.

In addition to the disclosed method, apparatuses, non-transitory computer readable storage mediums and computer program codes according to further exemplary aspects are disclosed in the following.

According to a further exemplary aspect, an apparatus is disclosed, wherein the apparatus comprises means configured for performing the disclosed method. For example, the apparatus is one of (1) a noise capture report collection device or (2) a module for noise capture report collection device or (3) a server or (4) a module for a server.

The disclosed apparatus may comprise a single means for all functions, a common plurality of means for all functions, or a plurality of different means for different functions.

The means of the disclosed apparatus may be implemented in hardware and/or software. They may comprise a processor for executing computer program code for realizing the required functions, a memory storing the computer program code, or both. Accordingly, the disclosed apparatus may comprise at least one processor and at least one memory containing computer program code, the at least one memory and the computer program code with the at least one processor configured to cause the respective apparatus at least to perform the respective method.

Alternatively or additionally, the means of the disclosed apparatuses may comprise circuitry that is designed to realize the required functions, for example implemented in a chipset or a chip, like an integrated circuit. According to a further exemplary aspect, a computer program code is disclosed, wherein the computer program code when executed by a processor causes an apparatus to perform the disclosed method.

According to a further exemplary aspect, a non-transitory computer readable storage medium is disclosed, in which computer program code is stored, wherein the computer program code causes an apparatus to perform the disclosed method when executed by a processor. The computer program code could be stored in the respective computer readable storage medium in the form of instructions encoding the respective computer-readable storage medium.

The disclosed computer readable storage medium may be intended for taking part in the operation of a device (e.g. a mobile device or a server), like an internal or external hard disk of a computer, or be intended for distribution of the computer program code, like an optical disc.

According to a further exemplary aspect, a system is disclosed. The system is defined in claim 11. The one or more noise capture report collection devices are configured for performing some steps of the disclosed method and that the one or more servers are configured for performing the other steps of the disclosed method. For example, the one or more mobile devices are apparatuses according to the first aspect, and the one or more servers are apparatuses according to the second aspect.

In the following, further exemplary embodiments of the exemplary aspects of the invention will be described.

According to an exemplary embodiment of the aspects, each noise capture report of the plurality of noise capture reports includes respective noise data representing the one or more respective noise characteristics by representing at least one of:
- a respective noise record;
- a respective noise level; or
- a respective noise spectrum.

The respective noise record may represent noise captured by a noise sensor at the respective capture position and at the respective capture time (e.g. capturing the noise may start at the respective capture time) for a capturing time period (e.g. a predetermined capturing period like 1 s or 0.5 s). An example for such a noise sensor may be a microphone. As disclosed above, the respective noise data may represent the respective noise record in encoded form, for example encoded according to an audio encoding algorithm like MPEG-1 Audio Layer III or MPEG-2 Audio Layer III as specified by the Moving Picture Experts Group (MPEG). Such a noise record may enable determining at least one of (1) a noise level and (2) a noise spectrum.

The respective noise level may represent a noise power level (e.g. in W or dB) of noise captured by a noise sensor like a microphone at the respective capture position and at the respective capture time (e.g. capturing the noise may start at the respective capture time) for a capturing time period (e.g. a predetermined capturing period like 1 s or 0.5 s). The respective noise level may for example be an average or maximum noise power level of the noise captured by the noise sensor for the capturing time period.

Likewise, the respective noise spectrum may represent the noise power spectrum of noise captured by a noise sensor like a microphone at the respective capture position and at the respective capture time (e.g. capturing the noise may start at the respective capture time) for a capturing time period (e.g. a predetermined capturing period like 1 s or 0.5 s). The respective noise spectrum may for example be a noise power spectrum describing noise power distributed over frequency (e.g. over discrete frequencies or continuous frequencies in a predetermined frequency interval) of the noise captured by the noise sensor for the capturing time period. Such a noise power spectrum could be obtained by a Fourier transform (e.g. a Fast Fourier Transformation, FFT) of the noise captured by the noise sensor for the capturing time period.

According to an exemplary embodiment of the aspects, the respective noise context represents or enables determining, for the respective area or location on the site, at least one of:
- a respective noise level;
- a respective average noise level;
- a respective noise level over time;
- a respective noise spectrum;
- a respective average noise spectrum; or
- a respective noise spectrum over time.

As disclosed above, each noise capture report of the plurality of noise capture reports may include respective noise data representing at least one of (1) a respective noise record which enables determining a respective noise level or noise spectrum or (2) a respective noise level or (3) a respective noise spectrum. Thereby, a noise level may be understood to be a noise power level (e.g. in W or dB), for example representing the maximum noise power or average noise power of noise; and a noise spectrum may be understood to be a noise power spectrum, for example describing noise power distributed over frequency (e.g. over discrete frequencies or continuous frequencies in a predetermined frequency interval).

For example, if each of the noise data of the one or more noise capture reports which are processed to determine the respective noise context represent a respective noise record and/or a respective noise level, the respective noise level for the respective area or location on the site may be determined as average noise level and/or as noise level over time based on the respective noise records and/or the respective noise levels represented by the noise data of the one or more noise capture reports.

An average noise level for the respective area or location on the site may be understood to be an arithmetic mean of the respective noise levels which are represented by and/or determinable based on the noise data of the one or more noise capture reports which are processed to determine the respective noise context. For example, the average noise level may be obtained by determining an arithmetic mean of the respective noise levels which are represented by and/or determinable based on the noise data of the one or more noise capture reports which are processed to determine the respective noise context.

A noise level over time for the respective area or location on the site may be understood to describe a development of the respective noise levels which are represented by and/or determinable based on the noise data of the one or more noise capture reports which are processed to determine the respective noise context over a day. For example, the noise level over time may be obtained by determining, for each predetermined time interval of a day (e.g. for each 30 minute time interval of a day like 0:01 to 00:30; 00:31 to 01:00, 01:01 to 01:30 etc.), a respective average noise level based on the respective noise data of the one or more noise capture reports (i.e. the one or more noise capture reports which are processed to determine the respective noise context) which have a capture time as represented by the time stamp data of the one or more noise capture reports which is in the respective predetermined time interval of a day (e.g. 01:00 to 01:30).

Likewise, if each of the noise data of the one or more noise capture reports which are processed to determine the respective noise context represent a respective noise record and/or a respective noise spectrum, the respective noise spectrum for the respective area or location on the site may be determined as average noise spectrum and/or as noise spectrum over time based on the respective noise records and/or the respective noise spectrums represented by the noise data of the one or more noise capture reports.

An average noise spectrum for the respective area or location on the site may be understood to represent, for each frequency (e.g. each predetermined frequency of discrete frequencies or continuous frequencies in a predetermined frequency interval), a respective arithmetic mean of the respective noise powers for the respective frequency which are represented by and/or determinable based on the noise data of the one or more noise capture reports which are processed to determine the respective noise context.

A noise spectrum over time for the respective area or location on the site may be understood to describe a development of the respective noise spectrums which are represented by and/or determinable based on the noise data of the one or more noise capture reports which are processed to determine the respective noise context over a day. For example, the noise spectrum over time may be obtained by determining, for each predetermined time interval of a day (e.g. for each 30 minute time interval of a day like 0:01 to 00:30; 00:31 to 01:00, 01:01 to 01:30 etc.), a respective average noise spectrum based on the respective noise data of the one or more noise capture reports which are processed to determine the respective noise context and which include time stamp data representing a respective time of a day as capture time which is in the respective predetermined time interval of a day (e.g. 01:00 to 01:30).

According to an exemplary embodiment of the aspects, the method further comprises:
- associating the respective noise context with a respective representation of the respective area or location included in a map of the site.

The map of the site may be understood to be a (e.g. two or three-dimensional) model of the site like a floor map and/or a radio positioning map. A floor map may be a geometric model of the site; and a positioning map may be a radio model of radio signals receivable on the site which may for example be used by mobile devices moving on the site to estimate their current position based on received radio signals. A representation of the respective area or location on the site may accordingly be understood to be a portion of such a model of the site corresponding to the respective area or location. For example, the map may be represented by map data. Associating the respective noise context with the respective representation of the respective area or location included in the map of the site may for example be understood to mean that the respective noise context is stored together with or linked to the map data representing the portion of the model of the site corresponding to the respective area or location.

According to the aspects, the method further comprises:
- associating the respective noise context with a respective grid point of a grid system of a map of the site.

As disclosed above, the map of the site may be understood to be a (e.g. two or three-dimensional) model of the site like a floor map and/or a radio positioning map. The grid system may be a predetermined grid system of the map of the site like a two or three dimensional grid (e.g. a square or cube grid). Each grid point of the grid system may correspond to a respective location on the site. It is to be understood that there may be more than one grid system, for example different grid systems may be included in the map for indoor and outdoor sections of the site. For example, the map may be represented by map data. Associating the respective noise context with the respective grid point of the grid system of the map of the site may for example be understood to mean that the respective noise context is stored together with or linked to the map data representing the respective grid point.

As disclosed above, the respective noise context is associated with a respective area or location on the site.

Accordingly, the respective grid point of the grid system of the map of the site corresponds to a location within the respective area on the site or to the respective location on the site.

The method further comprises:
- using the respective noise context associated with the respective area or location to verify or update a map of the site.

As disclosed above, a noise context enables determining an intended use and/or a frequency of use of the respective area or location. Accordingly, using the noise context to verify or update the map of the site comprises using the respective noise context to determine at least one of (1) an intended use or (2) a frequency of use of the respective area or location as disclosed in more detail below. For example, the intended use and/or frequency of use of the respective area or location determined based on the respective noise context may be used to verify an intended use and/or a frequency of use indicated by the map for the respective area or location. Alternatively or additionally, an indication of the intended use and/or frequency of use of the respective area or location determined based on the respective noise context may be included into the map to update the map.

The method further comprises:
- using the respective noise context to determine at least one of:
   - an intended use for the respective area or location; or
   - a frequency of use for the respective area or location.

Using the respective noise context to determine at least one of (1) an intended use or (2) a frequency of use for the respective area or location is understood to mean that at least one of (1) an intended use or (2) a frequency of use is determined for the respective area or location based on the respective noise context. Thereby, the determining may be performed according to one or more predetermined algorithms.

An example for such a predetermined algorithm may be a machine learning algorithm. For example, noise contexts associated with areas or locations of which the respective intended use and/or the frequency of use is known may be used to train the machine learning algorithm. The accordingly trained machine learning algorithm may receive the respective noise context as input and provide the intended use and/or frequency of use for the respective area or location as output. It is to be understood that the intended use and/or frequency of use determined for the respective area or location according to the machine learning algorithm may deviate from the real intended use and/or frequency of use of the respective area or location.

A further example for such a predetermined algorithm may be a matching algorithm or a pattern matching algorithm. For example, for each of a plurality of different predetermined intended uses and/or frequency of uses, a respective expected noise context may be predetermined. The matching algorithm may receive the respective noise context to determine the best matching expected noise context. The predetermined intended use and/or frequency of use for which the expected noise context is determined to best match the respective noise context associated with the respective area or location is then determined to be the intended use and/or frequency of use for the respective area or location.

For example, an intended use determined for the respective area or location may classify the respective area or location to be or to be part of or to comprise at least one of:
- an area (e.g. a room) of the site having a dedicated use like a eating area (e.g. a kitchen), an office area (e.g. a single office room or an open plan office room), a meeting area (e.g. a meeting room), a transition area (e.g. a doorway, a passageway, a stairway, an escalator, an elevator hoistway or an elevator landing), a waiting area (e.g. a waiting room), a shopping area (e.g. a salesroom) etc.; or
- a point-of-interest like an automated-teller machine, a vending machine etc.

The frequency of use determined for the respective area or location may describe the frequency of use over time, for example by describing the number of persons present in the respective area or at the respective location over time.

The method further comprises:
- verifying or updating a map for the site at least partially based on at least one of the:
   - intended use determined for the respective area or location; or
   - frequency of use determined for the respective area or location.

As disclosed above, the intended use and/or frequency of use determined for the respective area or location based on the respective noise context may be used to verify an intended use and/or a frequency of use indicated by the map for the respective area or location. Alternatively or additionally, an indication of the intended use and/or frequency of use of the respective area or location determined based on the respective noise context may be included into the map to update the map.

Each of the one or more noise capture reports of the plurality of noise capture reports includes respective position data representing a respective estimate of a respective capture position having a respective distance from the respective area or location on the site that is less than a predetermined distance threshold. For example, only noise data of these one or more noise capture reports of the plurality of noise capture reports may be processed to determine the noise context associated with the respective area or location such that only noise data is processed which is estimated to be captured at an capture position on the site that is less than a predetermined distance threshold from the respective area or location.

According to an exemplary embodiment of the aspects, each noise capture report of the plurality of noise capture reports further includes respective sensor data representing respective one or more environmental characteristics captured in addition to the respective one or more noise characteristics at the respective capture position. For example, the respective one or more environmental characteristics are/were captured by a sensor both (1) at the respective capture position an estimate of which is represented by the respective position data of the respective noise capture report and (2) at the respective capture time which is represented by the respective time stamp data of the respective noise capture report.

For example, the processing of the sensor data of a respective noise capture report of the plurality of noise capture reports could additionally consider at least one of (1) the noise data of the respective noise capture report or (2) the respective noise context determined by using the noise data of the respective noise capture report.

For example, the respective sensor data are or comprise at least one of:
- respective image data representing a respective image captured by an image sensor (e.g. at the respective capture position and at the respective capture time);
- respective radio data representing one or more radio characteristics captured by a radio interface (e.g. at the respective capture position and at the respective capture time); or
- respective LIDAR (Light Detection And Ranging) data representing one or more LIDAR captures performed by a LIDAR sensor (e.g. at the respective capture position and at the respective capture time).

According to an exemplary embodiment of the aspects, the respective noise data represent the one or more respective noise characteristics in form of:
- a noise record;
- a noise level;
- a noise spectrum.

According to an exemplary embodiment of the aspects, the method further comprises at least one of:
- compressing the noise data represented by the one or more noise capture reports of the plurality of noise capture reports; or
- compressing the respective noise context associated with the respective area or location on the site.

For compressing noise data and/or noise contexts conventional compression methods like the Lempel-Ziv (LZ) compression method or a DCT (Discrete Cosine Transform) compression method could be used. In particular, the DCT compression method for compressing data about radio signals which is disclosed in US Patent 10,520,579 could be applied for compressing noise data and/or noise contexts.

According to an exemplary embodiment of the aspects, processing noise data represented by one or more noise capture reports of the plurality of noise capture reports to determine a respective noise context associated with a respective area or location on the site is performed at least partially according to at least one of a machine learning algorithm or a matching algorithm or a pattern matching algorithm.

According to an exemplary embodiment of the aspects, the plurality of noise capture reports is/was captured by one or more noise capture report collection devices.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a block diagram of an exemplary embodiment of a system according to the present disclosure;
- Fig. 2: is a block diagram of an exemplary embodiment of a mobile device according to the present disclosure;
- Fig. 3: is a block diagram of an exemplary embodiment of a server according to the present disclosure;
- Fig. 4: is a flow chart illustrating an exemplary embodiment of a method according to the present disclosure;
- Fig. 5: is a schematic illustration of examples of tangible and non-transitory storage media according to the aspects.

### DETAILED DESCRIPTION

The following description serves to deepen the understanding of the present disclosure and shall be understood to complement and be read together with the description as provided in the above SUMMARY section of this specification.

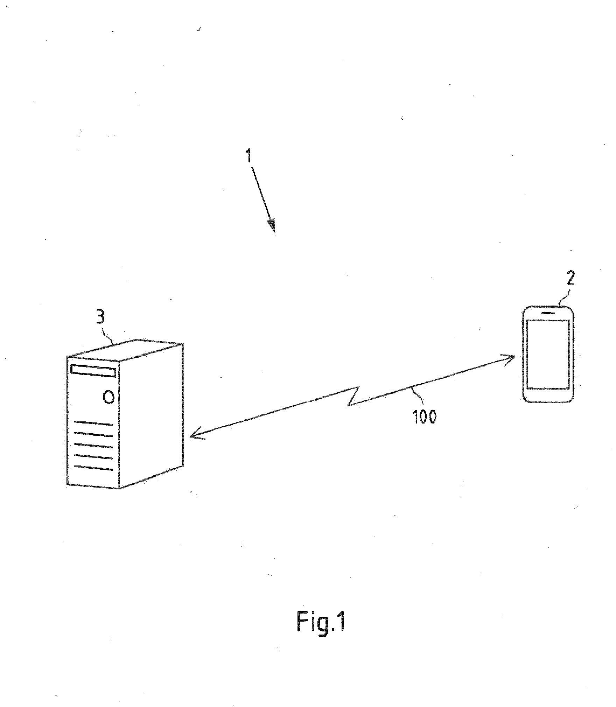

Fig. 1 is a schematic high-level block diagram of an exemplary embodiment of a system 1 according to the present disclosure. For exemplary purposes and without limiting the scope of the present disclosure, it is assumed in the following that system 1 serves for verifying or updating a map of a site which is at least partially inside a building or a complex of buildings like a shopping center, a parking garage, a train station, a bus station, an airport, a company site etc. Moreover, it is assumed in the following that the map of the site is a (e.g. two or three-dimensional) model of the site like a floor map.

System 1 comprises a mobile device 2 and a server 3. Mobile device 2 and server 3 may communicate with each other via communication path 100. Communication path 100 may be a direct or indirect communication path. For example, communication path 100 may comprise one or more hops, for example one or more communication links or communication connections. In the following, it is assumed that communication path 100 is a radio communication connection in a cellular network like a 2G/3G/4G/5G cellular communication network. The 2G/3G/4G/5G cellular radio communication standards are developed by the 3GPP and presently available under http://www.3gpp.org/. It is however to be understood that the present disclosure is not limited to this.

Mobile device 2 may be a noise capture report collection device which is configured to collect (e.g. capture) one or more noise capture reports (e.g. a plurality of noise capture reports) and to provide (e.g. transmit) the collected noise capture reports to server 3 via communication path 100 for verifying or updating the map of the site. It is to be understood that system 1 is not limited to mobile device 2 as noise capture report collection device. Mobile device 2 may be part of a plurality of noise capture report collection devices comprising at least one of (1) one or more mobile devices which are moving on the site and (2) one or more fixed devices which are installed at fixed locations on the site. An example of such a mobile device is a smartphone, a tablet computer, a notebook computer, a smart watch or a smart band. An example of such a fixed device is an Internet-of-Thing (IoT) device. Each noise capture report collection device of the plurality of noise capture report collection devices may be configured to collect (e.g. capture) respective noise capture reports and to provide (e.g. transmit) the collected respective noise capture reports to server 3 via communication path 100 for verifying or updating the map of the site.

Moreover, it is to be understood that system 1 is not limited to a single server 3, but may optionally comprise a plurality of servers (e.g. forming a server cloud). Accordingly, server 3 may be part of such a plurality of servers (e.g. a server cloud). In particular, server 3 may be responsible for verifying or updating the map of the site. As disclosed below in more detail, server 3 is configured to obtain or hold available (e.g. receive and store) a plurality of noise capture reports (e.g. from mobile device 2 via communication path 100) for verifying or updating the map of the site.

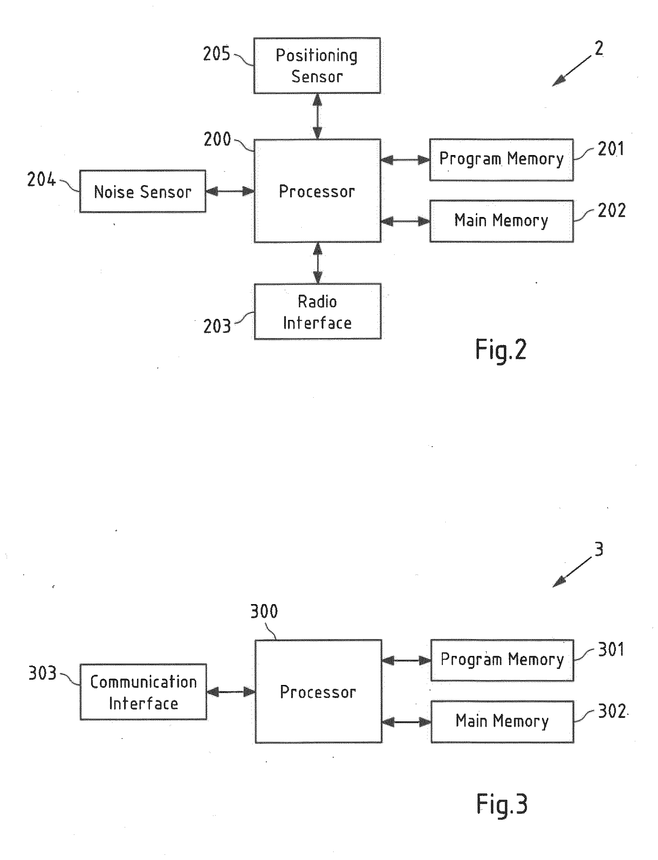

Fig. 2 is a block diagram of an exemplary embodiment of mobile device 2 according to the present disclosure. In the following, it is assumed that mobile device 2 of system 1 of Fig. 1 corresponds to this mobile device 2.

Mobile device 2 comprises a processor 200. Processor 200 may represent a single processor or two or more processors, which are for example at least partially coupled, for example via a bus. Processor 200 executes a computer program code stored in program memory 201 (e.g. computer program code causing mobile device 2 to collect (e.g. capture) one or more noise capture reports (e.g. a plurality of noise capture reports) and to provide (e.g. transmit) the collected noise capture reports to server 3 of system 1 of Fig. 1), and interfaces with a main memory, 202. Program memory 201 may also contain an operating system for processor 200 and further data like data of collected (e.g. captured) noise capture reports. Some or all of memories 201 and 202 may also be included into processor 200. One of or both of memories 201 and 202 may be fixedly connected to processor 200 or at least partially removable from processor 200, for example in the form of a memory card or stick.

A program memory (e.g. program memory 201) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 202) may for example be a volatile memory. It may for example be a DRAM memory, to give non-limiting example. It may for instance be used as a working memory for a processor (e.g. processor 200) when executing an operating system and/or programs.

Processor 200 further controls radio interface(s) 203. In the following, it is assumed that radio interface(s) 203 comprise a 2G/3G/4G/5G radio transceiver. It is however to be understood that the present disclosure is not limited to this.

The 2G/3G/4G/5G radio transceiver of radio interface(s) 203 is configured and/or used for communicating via a cellular network, for example for transmitting and receiving data via communication path 100 of system 1 of Fig. 1. Accordingly, mobile device 2 may use the 2G/3G/4G/5G radio transceiver of radio interface(s) 203 to communicate with server 3 of system 1 of Fig. 1, for example to provide (e.g. transmit) the collected noise capture reports to server 3 of system 1 of Fig. 1.

Moreover, processor 200 controls a noise sensor 204 like a microphone and a position sensor 205 like a GNSS sensor which are repeatedly used to determine a respective noise capture report.

To this end, noise sensor 204 is configured or used for repeatedly capturing noise records. Moreover, the positioning sensor 205 is configured or used for estimating a respective capture position for each noise record captured by the noise sensor.

Each noise capture report determined by mobile device 2 accordingly includes (1) respective position data representing a respective estimate of a respective capture position estimated by positioning sensor 205 and (2) respective noise data representing a respective noise record captured by noise sensor 204 at the respective capture position. Moreover, each noise capture report determined by mobile device 2 additionally includes time stamp data representing a respective capture time of the respective noise record at said respective capture position.

The respective position data may for example represent geographic coordinates (e.g. longitude and latitude and, optionally, altitude) of the respective estimate of the respective capture position. The respective noise data may represent the respective noise record in encoded form, for example according to an audio encoding algorithm like MPEG-1 Audio Layer III or MPEG-2 Audio Layer III as specified by the Moving Picture Experts Group (MPEG). The respective time stamp data may represent the respective capture time in UNIX time format.

It is to be understood that any computer program code required for processing sensor captures to determine data of a respective noise capture report may be stored in an own memory of the respective sensor and executed by an own processor of the respective sensor or it may be stored for example in program memory 201 and executed for example by processor 200.

The components 201 to 205 of mobile device 2 may for instance be connected with processor 200 by means of one or more serial and/or parallel busses.

The hardware of components 201 to 205 of mobile device 2 are part of most existing mobile devices like smartphones, tablet computers, notebook computers, smart watches or smart bands such that only software modifications are necessary to accordingly configure these existing mobile devices.

It is to be understood that mobile device 2 may comprise various other components like a user interface for receiving user input.

Fig. 3 is a block diagram of an exemplary embodiment of server 3 according to the present disclosure. In the following, it is assumed that server 3 of system 1 of Fig. 1 corresponds to this server 3.

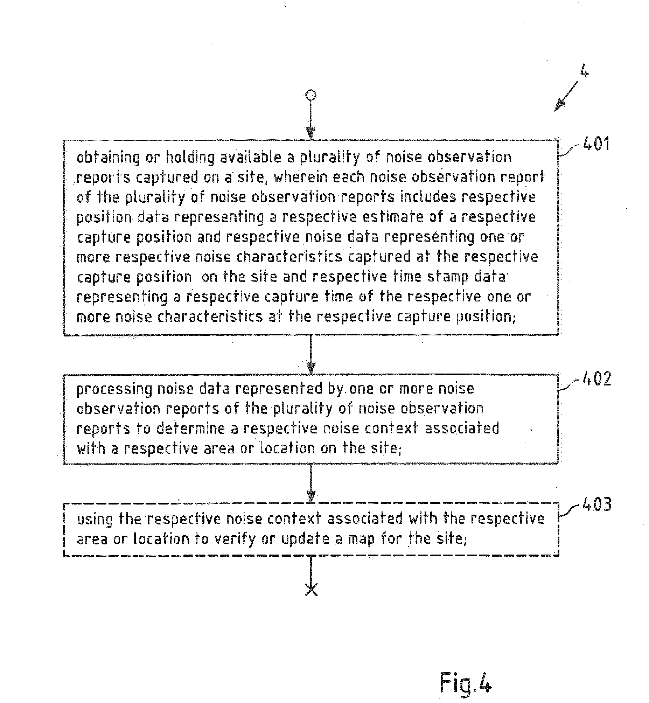

Server 3 comprises a processor 300. Processor 300 may represent a single processor or two or more processors, which are for instance at least partially coupled, for instance via a bus. Processor 300 executes a computer program code (e.g. computer program code causing server 3 to perform any one embodiment of the disclosed method like the method described below with reference to Fig. 4 when executed on processor 300) stored in program memory 301, and interfaces with a main memory 302. Program memory 301 may also contain an operating system for processor 300. Moreover, program memory 301 may contain further data like map data. Some or all of memories 301 and 302 may also be included into processor 300. One of or both of memories 301 and 302 may be fixedly connected to processor 300 or at least partially removable from processor 300, for example in the form of a memory card or stick.

Processor 300 further controls a communication interface 303 which is configured to communicate via a communication network. Server 3 may use communication interface 303 to communicate with mobile device 2 of system 1 of Fig. 1. In the following, it is assumed that communication interface 303 is a 2G/3G/4G/5G radio transceiver which is configured and/or used for communicating via a cellular network, for example for transmitting and receiving data via communication path 100 of system 1.

The components 301 to 303 of server 3 may for example be connected with processor 300 by means of one or more serial and/or parallel busses.

It is to be understood that server 3 may comprise various other components like a user interface for receiving user input.

Fig. 4 is a flow chart 4 illustrating an exemplary embodiment of a method according to the present disclosure. Without limiting the scope of the present disclosure, it is assumed in the following that server 3 as disclosed above with respect to system 1 of Fig. 1 performs the steps of flow chart 4.

In a step 401, a plurality of noise capture reports captured on a site is obtained or hold available, wherein each noise capture report of the plurality of noise capture reports includes respective position data representing a respective estimate of a respective capture position and respective noise data representing one or more respective noise characteristics captured at the respective capture position on the site and respective time stamp data representing a respective capture time of the respective one or more noise characteristics at the respective capture position.

In the following, it is assumed that the plurality of noise capture reports is received from mobile device 2 via communication path 100 and stored in program memory 301 in step 401. As disclosed above, each noise capture report determined by mobile device 2 includes (1) respective position data representing a respective estimate of a respective capture position estimated by positioning sensor 205 and (2) respective noise data representing a respective noise record captured by noise sensor 204 at the respective capture position and (3) time stamp data representing a respective capture time of the respective noise record at said respective capture position. It is however to be understood that the present disclosure is not limited to this and that the plurality of noise capture reports could be received from a plurality of noise capture report collection devices comprising mobile device 2.

In a step 402, noise data represented by one or more noise capture reports of the plurality of noise capture reports are processed to determine a respective noise context associated with a respective area or location on the site. It is to be understood that, in addition to the noise data, further data (e.g. position data and/or time stamp data and/or sensor data) represented by the one or more noise capture reports of the plurality of noise capture reports may be processed to determine the respective noise context. For example, the position data and/or the time stamp data represented by the one or more noise capture reports of the plurality of noise capture reports may be processed together with the noise data to determine the respective noise context in step 402.

That the respective noise context is associated with the respective area or location on the site may be understood to mean that only noise data captured in or within a predetermined threshold distance from the respective area or location is processed in step 402 to determine the respective noise context. For example, each of the one or more noise capture reports processed in step 402 includes position data representing a respective estimate of a respective capture position having a respective distance from said respective area or location on said site that is less than the predetermined distance threshold.

The respective noise context respective noise context associated with a respective area or location on the site may be obtained as a result of the processing in step 402. Thereby, the respective noise context associated with the respective area or location on the site represents or enables determining, for the respective area or location on the site, at least one of (1) a respective noise level and (2) a respective noise spectrum. Without limiting the scope of the present disclosure, it is assumed in the following that the respective noise context associated with the respective area or location on the site represents, for the respective area or location on the site, a respective noise level over time. As disclosed above, such a noise level over time for the respective area or location on the site may be understood to describe a development of the respective noise levels which are represented by and/or determinable based on the noise data of the one or more noise capture reports which are processed in step 402 over a day.

In step 402, the noise level over time represented by the respective noise context may be obtained by determining, for each predetermined time interval of a day (e.g. for each 30 minute time interval of a day like 0:01 to 00:30; 00:31 to 01:00, 01:01 to 01:30 etc.), a respective average noise level based on the respective noise data of the one or more noise capture reports, wherein, for each predetermined time interval of a day, only respective noise data having a respective capture time as represented by the time stamp data of data of the one or more noise capture reports which is in the respective predetermined time interval of a day are used to determine the respective average noise level. For example, if two noise capture reports of the one or more noise capture reports have a respective capture time as represented by the time stamp data of data of these two noise capture reports which is in a predetermined time interval of a day, the respective average noise level for this predetermined time interval of a day may be determined by determining the respective average noise level represented by the noise records represented by the noise data of these two noise capture reports.

In an optional step 403, the respective noise context associated with the respective area or location determined in step 402 is used to verify or update the map of the site.

To this end, the respective noise context may be used to determine at least one of (1) an intended use for the respective area or location or (2) a frequency of use for the respective area or location in step 403. Thereby, the determining may be performed according to one or more predetermined algorithms like a machine learning algorithm or a matching algorithm.

Without limiting the scope of the present disclosure, it is assumed in the following that a matching algorithm is used to determine at least one of (1) an intended use for the respective area or location or (2) a frequency of use for the respective area or location in step 403. Accordingly, for each of a plurality of different predetermined intended uses and/or frequency of uses, a respective expected noise context representing a respective noise level over time may be predetermined and stored in memory 301. In step 403, the matching algorithm may receive the respective noise context to determine the best matching expected noise context. The predetermined intended use and/or frequency of use for which the expected noise context is determined to best match the respective noise context associated with the respective area or location is then determined to be the intended use and/or frequency of use for the respective area or location.

For example, an intended use determined for the respective area or location in step 403 may classify the respective area or location to be or to be part of or to comprise at least one of:
- an area (e.g. a room) of the site having a dedicated use like a eating area (e.g. a kitchen), an office area (e.g. a single office room or an open plan office room), a meeting area (e.g. a meeting room), a transition area (e.g. a doorway, a passageway, a stairway, an escalator, an elevator hoistway or an elevator landing), a waiting area (e.g. a waiting room), a shopping area (e.g. a salesroom) etc.; or
- a point-of-interest like an automated-teller machine, a vending machine etc.

The frequency of use determined for the respective area or location in step 403 may describe the frequency of use over time, for example by describing the number of persons present in the respective area or at the respective location over time.

Subsequently, the intended use and/or the frequency of use determined for the respective area or location in step 403 is used to verify or update the map of the site. For example, the intended use and/or frequency of use determined for the respective area or location based on the respective noise context may be used to verify an intended use and/or a frequency of use indicated by the map for the respective area or location. Alternatively or additionally, an indication of the intended use and/or frequency of use of the respective area or location determined based on the respective noise context may be included into the map to update the map.

As a result of step 403, updated or verified map data representing the accordingly updated or verified map of the site may be obtained and for example stored in memory 301.

It is to be understood that steps 402 and 403 may be performed for a plurality of areas or locations on the site. For example, for each of these areas or locations, a respective noise context associated with the respective area or location on the site may be determined in step 402 by processing noise data; and, subsequently, the noise contexts determined in step 402 for these areas or locations may be used to verify or update the map of the site.

The method of flow chart 4 of Fig. 4 thus uses noise data which can be collected by most existing mobile devices like smartphones, tablet computers, notebook computers, smart watches or smart bands to verify or update the map of the site. It thus provides a simple and efficient solution for verifying or updating the map of the site which does not require a manual survey of the site.

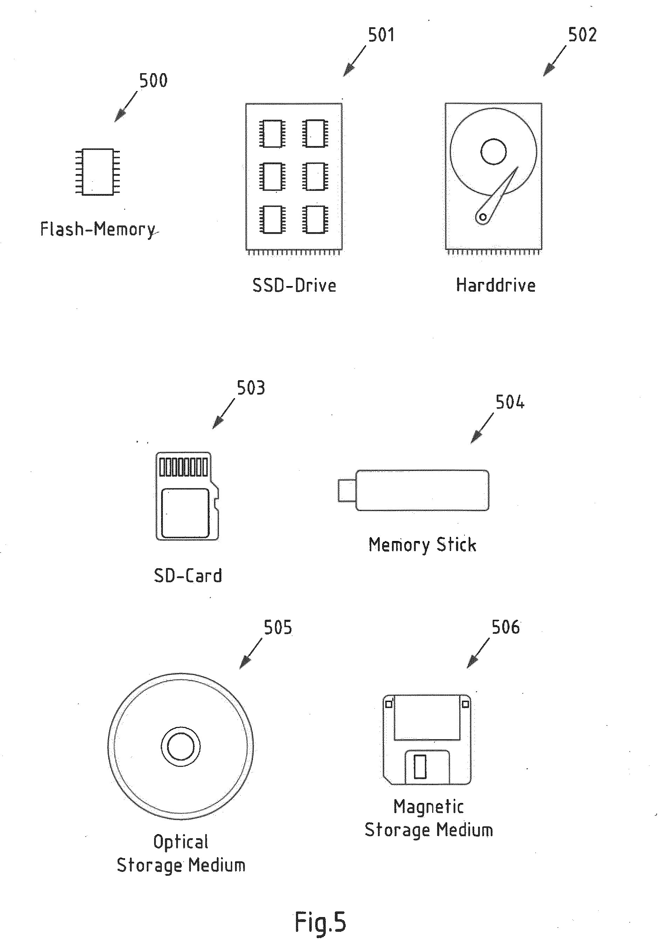

Fig. 5 is a schematic illustration of examples of tangible and non-transitory computer-readable storage media according to the aspects that may for instance be used to implement memory 201 of Fig. 2 or 301 of Fig. 3. To this end, Fig. 5 displays a flash memory 500, which may for instance be soldered or bonded to a printed circuit board, a solid-state drive 501 comprising a plurality of memory chips (e.g. Flash memory chips), a magnetic hard drive 502, a Secure Digital (SD) card 503, a Universal Serial Bus (USB) memory stick 504, an optical storage medium 505 (such as for instance a CD-ROM or DVD) and a magnetic storage medium 506.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" or "at least one of A, B or C" may be understood to be not exhaustive and to include at least the following: (1) A, or (2) B, or (3) C, or (4) A and B, or (5) A and C, or (6) B and C, or (7) A and B and C.

## Claims

1. A computer-implemented method comprising:
- obtaining or holding available (401) a plurality of noise capture reports captured on a site, wherein said site is at least partially inside a building or a complex of buildings, wherein each noise capture report of said plurality of noise capture reports includes (i) respective position data representing a respective estimate of a respective capture position, (ii) respective noise data representing one or more respective noise characteristics captured at said respective capture position on said site, and (iii) respective time stamp data representing a respective capture time of said respective one or more noise characteristics at said respective capture position;
- processing (402) noise data represented by one or more of said plurality of noise capture reports, said one or more noise capture reports including respective position data representing a respective estimate of a respective capture position having a respective distance from an area or location on said site, wherein said respective distance is less than a predetermined distance threshold;
- determining, as a result of the processing, a respective noise context of said respective area or location, wherein the respective noise context represents one or more noise characteristics which are expected to be typical for the respective area or location;
- using (403) said respective noise context to verify or update a map for said site by associating said respective noise context with a respective representation of said respective area or location included in the map, and/or by
associating said respective noise context with a respective grid point of a grid system of the map, wherein said respective grid point corresponds to said respective area or location;
- using said respective noise context to determine an intended use and/or a frequency of use of said respective area or location; and
- verifying or updating the map for said site at least partially based on the intended use and/or the frequency of use determined for said respective area or location.

2. The method according to claim 1, wherein said respective noise context represents, for said respective area or location on said site, at least one of:
- a respective noise level;
- a respective average noise level;
- a respective noise level over time;
- a respective noise spectrum;
- a respective average noise spectrum; and
- a respective noise spectrum over time.

3. The method according to claim 1 or 2, wherein determining said intended use comprises classifying the respective area or location to be or to be part of or to comprise at least one of:
- an area of the site having a dedicated use, in particular an eating area, an office area, a meeting area, a transition area, a waiting area, or a shopping area; or
- a point-of-interest, in particular an automated-teller machine, or a vending machine.

4. The method according to any of claims 1 to 3, wherein each noise capture report of said plurality of noise capture reports further includes respective sensor data representing one or more respective environmental characteristics captured in addition to said respective one or more noise characteristics at said respective capture position.

5. The method according to claim 4, wherein said respective sensor data are or comprise at least one of:
- respective image data representing a respective image captured by an image sensor;
- respective radio data representing one or more radio characteristics captured by a radio interface; and
- respective LIDAR data representing one or more LIDAR captures performed by a LIDAR sensor.

6. The method according to any of claims 1 to 5, wherein said respective noise data represent said one or more respective noise characteristics by representing at least one of:
- a noise record;
- a noise level;
- a noise spectrum.

7. The method according to any of claims 1 to 6, wherein processing noise data represented by one or more noise capture reports of said plurality of noise capture reports to determine a respective noise context associated with a respective area or location on said site is performed at least partially according to at least one of a machine learning algorithm or a matching algorithm or a pattern matching algorithm.

8. The method according to any of claims 1 to 7, wherein said plurality of noise capture reports is/was captured by one or more noise capture report collection devices (2).

9. A computer program code, the computer program code when executed by a processor (200, 300) causing an apparatus (2, 3) to perform the method according to any of claims 1 to 8.

10. An apparatus (2, 3) comprising means (200 - 205, 300 - 303) configured for performing the method according to any of claims 1 to 8.

11. A system (1) comprising one or more servers (3) and one or more noise capture report collection devices (2) configured to collect said one or more noise capture reports and to provide the collected one or more noise capture reports to said one or more servers (3), wherein said one or more servers and said one or more noise capture report collection devices are configured to cooperate for performing the method according to any of claims 1 to 8.

## Patentansprüche

1. Computerimplementiertes Verfahren, umfassend:
- Erhalten oder Bereithalten (401) einer Vielzahl von Rauscherfassungsberichten, die an einem Standort erfasst wurden, wobei sich der Standort mindestens teilweise innerhalb eines Gebäudes oder eines Gebäudekomplexes befindet, wobei jeder Rauscherfassungsbericht der Vielzahl von Rauscherfassungsberichten (i) jeweilige Positionsdaten, die eine jeweilige Schätzung einer jeweiligen Erfassungsposition darstellen, (ii) jeweilige Rauschdaten, die ein oder mehrere jeweilige Rauscheigenschaften darstellen, die an der jeweiligen Erfassungsposition an dem Standort erfasst wurden, und (iii) jeweilige Zeitstempeldaten, die eine jeweilige Erfassungszeit des jeweiligen einen oder mehrerer Rauscheigenschaften an der jeweiligen Erfassungsposition darstellen, beinhaltet;
- Verarbeiten (402) von Rauschdaten, die durch einen oder mehrere der Vielzahl von Rauscherfassungsberichten dargestellt werden, wobei der eine oder mehrere Rauscherfassungsberichte jeweilige Positionsdaten beinhalten, die eine jeweilige Schätzung einer jeweiligen Erfassungsposition darstellen, die eine jeweilige Entfernung von einem Bereich oder einer Stelle an dem Standort aufweist, wobei die jeweilige Entfernung geringer als eine vorbestimmte Entfernungsschwelle ist;
- Bestimmen, als Ergebnis des Verarbeitens, eines jeweiligen Rauschkontexts des jeweiligen Bereichs oder der jeweiligen Stelle, wobei der jeweilige Rauschkontext eine oder mehrere Rauscheigenschaften darstellt, von denen erwartet wird, dass sie für den jeweiligen Bereich oder die jeweilige Stelle typisch sind;
- Verwenden (403) des jeweiligen Rauschkontexts, um eine Karte für den Standort durch Verknüpfen des jeweiligen Rauschkontexts mit einer jeweiligen Darstellung des jeweiligen Bereichs oder der jeweiligen Stelle, der/die in der Karte beinhaltet ist, zu überprüfen oder aktualisieren, und/oder durch Verknüpfen des jeweiligen Rauschkontexts mit einem jeweiligen Rasterpunkt eines Rastersystems der Karte,
wobei der jeweilige Rasterpunkt dem jeweiligen Bereich oder der jeweiligen Stelle entspricht;
- Verwenden des jeweiligen Rauschkontexts, um eine angedachte Verwendung und/oder eine Verwendungshäufigkeit des jeweiligen Bereichs oder der jeweiligen Stelle zu bestimmen; und
- Überprüfen oder Aktualisieren der Karte für den Standort mindestens teilweise basierend auf der angedachten Verwendung und/oder der Verwendungshäufigkeit, die für den jeweiligen Bereich oder der jeweiligen Stelle bestimmt wird.

2. Verfahren nach Anspruch 1, wobei der jeweilige Rauschkontext für den jeweiligen Bereich oder die jeweilige Stelle an dem Standort mindestens eines darstellt von:
- einem jeweiligen Rauschpegel;
- einem jeweiligen durchschnittlichen Rauschpegel;
- einem jeweiligen Rauschpegel im Zeitverlauf;
- einem jeweiligen Rauschspektrum;
- einem jeweiligen durchschnittlichen Rauschspektrum; und
- einem jeweiligen Rauschspektrum im Zeitverlauf.

3. Verfahren nach Anspruch 1 oder 2, wobei Bestimmen der angedachten Verwendung das Klassifizieren des jeweiligen Bereichs oder der jeweiligen Stelle als solche oder eines Teils davon zu sein, umfasst, oder mindestens eines zu umfassen von:
- einem Bereich des Standorts, der eine vorgesehene Verwendung aufweist, insbesondere einen Essbereich, einen Bürobereich, einen Konferenzbereich, einen Durchgangsbereich, einen Wartebereich oder einen Einkaufsbereich; oder
- einem Punkt von Interesse, insbesondere einem Geldautomaten oder einem Verkaufsautomaten.

4. Verfahren nach einem der Ansprüche 1 bis 3, wobei jeder Rauscherfassungsbericht der Vielzahl von Rauscherfassungsberichten weiter jeweilige Sensordaten beinhaltet, die eine oder mehrere jeweilige Umgebungseigenschaften darstellen, die zusätzlich zu der jeweiligen einen oder den jeweiligen mehreren Geräuscheigenschaften an der jeweiligen Erfassungsposition erfasst werden.

5. Verfahren nach Anspruch 4, wobei die jeweiligen Sensordaten mindestens eines sind oder umfassen von:
- jeweiligen Bilddaten, die ein jeweiliges von einem Bildsensor erfasstes Bild darstellen;
- jeweiligen Funkdaten, die eine oder mehrere von einer Funkschnittstelle erfasste Funkeigenschaften darstellen; und
- jeweiligen LIDAR-Daten, die eine oder mehrere von einem LIDAR-Sensor durchgeführte LIDAR-Erfassungen darstellen.

6. Verfahren nach einem der Ansprüche 1 bis 5, wobei die jeweiligen Rauschdaten die eine oder mehreren jeweiligen Rauscheigenschaften darstellen, durch Darstellen von mindestens einem von:
- einer Rauschaufzeichnung;
- einem Rauschpegel;
- einem Rauschspektrum.

7. Verfahren nach einem der Ansprüche 1 bis 6, wobei Verarbeiten von Rauschdaten, die durch einen oder mehrere Rauscherfassungsberichte der Vielzahl von Rauscherfassungsberichten dargestellt werden, um einen jeweiligen Rauschkontext zu bestimmen, der mit einem jeweiligen Bereich oder einer jeweiligen Stelle an dem Standort verknüpft ist, mindestens teilweise gemäß einem von einem Maschinenlernalgorithmus oder einem Abgleichalgorithmus oder einem Musterabgleichalgorithmus durchgeführt wird.

8. Verfahren nach einem der Ansprüche 1 bis 7, wobei die Vielzahl von Rauscherfassungsberichten von einer oder mehreren Rauschberichterhebungsvorrichtungen (2) erfasst wird/wurde.

9. Computerprogrammcode, wobei der Computerprogrammcode, wenn er von einem Prozessor (200, 300) ausgeführt wird, eine Einrichtung (2, 3) veranlasst, das Verfahren nach einem der Ansprüche 1 bis 8 durchzuführen.

10. Einrichtung (2, 3), die Mittel (200 - 205, 300 - 303) umfasst, die konfiguriert sind, um das Verfahren nach einem der Ansprüche 1 bis 8 durchzuführen.

11. System (1), das einen oder mehrere Server (3) und eine oder mehrere Rauscherfassungsberichterhebungsvorrichtungen (2) umfasst, die konfiguriert sind, um den einen oder mehrere Rauscherfassungsberichte zu erheben und den erhobenen einen oder mehrere Rauscherfassungsberichte dem einen oder mehreren Servern (3) bereitzustellen, wobei der eine oder mehrere Server und die eine oder mehrere Rauscherfassungsberichterhebungsvorrichtungen konfiguriert sind, um zum Durchführen des Verfahrens nach einem der Ansprüche 1 bis 8 zusammenzuwirken.

## Revendications

1. Procédé mis en œuvre par ordinateur comprenant :
- l'obtention ou le maintien à disposition (401) d'une pluralité de rapports de capture de bruit capturés sur un site, dans lequel ledit site est au moins partiellement à l'intérieur d'un bâtiment ou d'un complexe de bâtiments, dans lequel chaque rapport de capture de bruit de ladite pluralité de rapports de capture de bruit inclut (i) des données de position respectives représentant une estimation respective d'une position de capture respective, (ii) des données de bruit respectives représentant une ou plusieurs caractéristiques de bruit respectives capturées à ladite position de capture respective sur ledit site, et (iii) des données d'horodatage respectives représentant un temps de capture respectif desdites une ou plusieurs caractéristiques de bruit respectives à ladite position de capture respective ;
- le traitement (402) des données de bruit représentées par un ou plusieurs de ladite pluralité de rapports de capture de bruit, lesdits un ou plusieurs rapports de capture de bruit incluant des données de position respectives représentant une estimation respective d'une position de capture respective présentant une distance respective par rapport à une zone ou un emplacement sur ledit site, dans lequel ladite distance respective est inférieure à un seuil de distance prédéterminé ;
- la détermination, en résultat du traitement, d'un contexte de bruit respectif de ladite zone ou dudit emplacement respectif, dans lequel le contexte de bruit respectif représente une ou plusieurs caractéristiques de bruit qui sont censées être courantes pour la zone ou de l'emplacement respectif ;
- l'utilisation (403) dudit contexte de bruit respectif pour vérifier ou mettre à jour une carte pour ledit site par association dudit contexte de bruit respectif à une représentation respective de ladite zone ou dudit emplacement respectif inclus dans la carte, et/ou par
association dudit contexte de bruit respectif à un point de grille respectif d'un système de grille de la carte,
dans lequel ledit point de grille respectif correspond à ladite zone ou audit emplacement respectif ;
- l'utilisation dudit contexte de bruit respectif pour déterminer une utilisation prévue et/ou une fréquence d'utilisation de ladite zone ou dudit emplacement respectif ; et
- la vérification ou la mise à jour de la carte dudit site au moins partiellement en fonction de l'utilisation prévue et/ou de la fréquence d'utilisation déterminée pour ladite zone ou ledit emplacement respectif.

2. Procédé selon la revendication 1, dans lequel ledit contexte de bruit respectif représente, pour ladite zone ou ledit emplacement respectif sur ledit site, au moins l'un des éléments suivants :
- un niveau de bruit respectif ;
- un niveau de bruit moyen respectif ;
- un niveau de bruit respectif au fil du temps ;
- un spectre de bruit respectif ;
- un spectre de bruit moyen respectif ; et
- un spectre de bruit respectif au fil du temps.

3. Procédé selon la revendication 1 ou 2, dans lequel la détermination de ladite utilisation prévue comprend la classification de la zone ou de l'emplacement respectif comme étant ou faisant partie de ou comprenant au moins l'un des éléments suivants :
- une zone du site présentant une utilisation dédiée, notamment une zone de restauration, une zone de bureaux, une zone de réunion, une zone de transition, une zone d'attente ou une zone commerciale ; ou
- un point d'intérêt, notamment un distributeur automatique de billets ou un distributeur automatique.

4. Procédé selon l'une quelconque des revendications 1 à 3, dans lequel chaque rapport de capture de bruit de ladite pluralité de rapports de capture de bruit inclut en outre des données de capteur respectives représentant une ou plusieurs caractéristiques environnementales respectives capturées en plus desdites une ou plusieurs caractéristiques de bruit respectives à ladite position de capture respective.

5. Procédé selon la revendication 4, dans lequel lesdites données de capteur respectives sont ou comprennent au moins l'un des éléments suivante :
- des données d'image respectives représentant une image respective capturée par un capteur d'image ;
- des données radio respectives représentant une ou plusieurs caractéristiques radio capturées par une interface radio ; et
- des données LIDAR respectives représentant une ou plusieurs captures LIDAR effectuées par un capteur LIDAR.

6. Procédé selon l'une quelconque des revendications 1 à 5, dans lequel lesdites données de bruit respectives représentent lesdites une ou plusieurs caractéristiques de bruit respectives en représentant au moins l'un des éléments suivants :
- un enregistrement de bruit ;
- un niveau de bruit ;
- un spectre de bruit.

7. Procédé selon l'une quelconque des revendications 1 à 6, dans lequel le traitement des données de bruit représentées par un ou plusieurs rapports de capture de bruit de ladite pluralité de rapports de capture de bruit pour déterminer un contexte de bruit respectif associé à une zone ou un emplacement respectif sur ledit site est effectué au moins partiellement selon au moins l'un parmi un algorithme d'apprentissage automatique ou un algorithme de correspondance ou un algorithme de correspondance de motifs.

8. Procédé selon l'une quelconque des revendications 1 à 7, dans lequel ladite pluralité de rapports de capture de bruit sont/ont été capturés par un ou plusieurs dispositifs de collecte de rapports de capture de bruit (2).

9. Code de programme informatique, le code de programme informatique, lorsqu'il est exécuté par un processeur (200, 300), amenant un appareil (2, 3) à réaliser le procédé selon l'une quelconque des revendications 1 à 8.

10. Appareil (2, 3) comprenant des moyens (200 - 205, 300 - 303) configurés pour mettre en œuvre le procédé selon l'une quelconque des revendications 1 à 8.

11. Système (1) comprenant un ou plusieurs serveurs (3) et un ou plusieurs dispositifs de collecte de rapports de capture de bruit (2) configurés pour collecter lesdits un ou plusieurs rapports de capture de bruit et pour fournir les un ou plusieurs rapports de capture de bruit collectés auxdits un ou plusieurs serveurs (3), dans lequel lesdits un ou plusieurs serveurs et lesdits un ou plusieurs dispositifs de collecte de rapports de capture de bruit sont configurés pour coopérer pour mettre en œuvre le procédé selon l'une quelconque des revendications 1 à 8.
